# DEMANDE DE BREVET EUROPEEN

(11) **EP 2 128 792 A1**
(43) Date de publication de la demande: **02.12.2009**
(21) Numéro de dépôt: 09161577.3
(22) Date de dépôt: 29.05.2009
(51) Int. Cl.: G06K 9/00, G06K 9/38, G06K 9/60, G09G 5/10, B60R 1/00

(54) **Procédé et dispositif d'amélioration de la vision nocturne pour véhicule automobile**

(30) Priorité: 29.05.2008 FR 0802963
(71) Demandeur: Valeo Vision, 93012 Bobigny Cedex (FR)
(72) Inventeur: HUE, David, 78400, Chatou (FR)

(57) **Abrégé**

L'invention a pour objet une méthode d'amélioration de la transcription d'images nocturnes capturées par des moyens optoélectroniques (6) pour informer un conducteur de l'environnement paysager de son véhicule. Cette méthode consiste à capturer des informations relatives aux images nocturnes et à convertir les images nocturnes capturées (5) en images de transcription (3) sur un moyen d'affichage (2). La conversion des images capturées (5) associe à une opération de repérage sur les images capturées (5) d'une source lumineuse intense (4), une opération de traitement par assombrissement des pixels correspondant à cette source lumineuse intense (4). Cette association est apte à retranscrire sur le moyen d'affichage (2) des images (3) semblables à celles relevant d'une vision naturelle perçue par l'oeil humain de cette source lumineuse intense (4).

## Description

### Domaine technique de l'invention.

L'invention est du domaine de l'équipement automobile relevant des accessoires de transformation d'informations lumineuses en informations électriques en vue d'améliorer une image détectée par des moyens optoélectroniques, caméra notamment. Elle a pour objet une méthode et un dispositif pour améliorer la pertinence de l'information communiquée à un conducteur relative à l'environnement de son véhicule, et plus particulièrement relative à un éventuel obstacle placé sur le trajet de son véhicule.

### Etat de la technique.

Dans le domaine des véhicules automobiles, il est connu des accessoires exploitant des images captées par des moyens optoélectronique, tels qu'une caméra ou organe de détection d'images analogue. Parmi ces accessoires, on connaît ceux destinés à détecter l'environnement du véhicule en milieu nocturne ou sombre, et à retranscrire pour le conducteur les images captées par l'intermédiaire d'un écran ou organe d'affichage analogue. L'intérêt d'un tel accessoire est d'assister le conducteur dans la détection d'un éventuel obstacle situé sur le trajet de son véhicule, en vue de permettre au conducteur d'anticiper un acte d'évitement de l'obstacle. De tels accessoires sont notamment exploités en milieu rural, lorsque les faisceaux lumineux visibles générés par le véhicule sont « de courte portée » dans le but, par exemple, d'éviter d'éblouir un usager de la route circulant en sens inverse. Habituellement, les moyens optoélectroniques mis en oeuvre utilisent des pixels ayant une résolution de l'ordre de 12 bits avec en conséquence 4096 niveaux de gris différents. Selon une telle résolution, un pixel d'une image capturée aura un niveau de gris compris entre 0 et 4095, le niveau 0 correspondant au noir et le niveau 4095 correspondant au blanc. Une telle résolution vise à optimiser la capture d'images avec une dynamique la plus satisfaisante possible pour une résolution d'image raisonnablement exploitable. En effet, un tel nombre de niveaux de gris permet davantage de nuance de gris et donc un meilleur contraste. Dans le cas présent le terme « dynamique », signifie la capacité à capter des sources lumineuses d'intensité différente. Les capteurs dits dynamiques, permettent ainsi de capter à la fois une source lumineuse intense et une source lumineuse faible. Cependant, une telle résolution n'est pas compatible avec les moyens existant de retranscription utile pour le conducteur, et il est donc courant de traiter l'image capturée pour la retranscrire avec une résolution suffisante. Cette retranscription correspond à une conversion des images capturées en 12 bits, en images retranscrites pour des moyens d'affichage correspondants, telles qu'en 8 bits par exemple.

On sait aussi que les dispositifs CMOS (Complementary Metal Oxide Semiconductor ; en anglais) équipant habituellement les moyens optoélectroniques utilisés dans le domaine, offrent une perception assez peu naturelle de l'environnement réel du véhicule, en présentant des zones de contraste et d'intensité lumineuse très variables. En effet, la perception des contrastes par l'oeil humain est plutôt logarithmique alors que les capteurs CMOS sont pour la plupart linéaires. Par là, on entend que sur une échelle de niveau de gris, la perception du niveau de contraste, ou du niveau de gris, augmente linéairement ou de façon logarithmique avec l'augmentation de l'intensité lumineuse, selon que le capteur est respectivement linéaire ou logarithmique. On dit aussi que la réponse ou l'image envoyée par le capteur est linéaire ou logarithmique. Il est donc courant de convertir les images capturées par les moyens optoélectroniques, en appliquant par exemple un tableau de conversion dit LUT (loi de transformation des niveaux de gris ; Look-Up Table en anglais). Cette conversion permet de corriger les défauts des capteurs CMOS, pour retranscrire une image destinée au conducteur plus proche de celle naturelle pour l'oeil humain. Notamment, une telle conversion est susceptible d'améliorer le contraste des images nocturnes capturées par les moyens optoélectroniques. Les capteurs avec composants CMOS linéaires, ou capteurs CMOS, sont employés de manière à envoyer une réponse plus proche d'une réponse logarithmique. Ces méthodes connues de l'homme du métier, emploient le ou les composants CMOS de manière à capturer plusieurs images sur un intervalle de temps à des coefficients linéaires différents, puis par sommation des valeurs, fournir une réponse proche d'une réponse logarithmique. L'image capturée est ainsi une image où la progression des niveaux de gris en fonction de la luminosité est davantage logarithmique.

Néanmoins, les différents traitements d'images appliquées aux informations fournies par les moyens optoélectroniques sont insuffisants pour satisfaire au mieux aux exigences d'avoir à retranscrire une image pour le conducteur la plus proche possible d'une image naturellement perçue par l'oeil humain. Notamment, les images relatives à un paysage nocturne sont très sombres dans les zones non éclairées et sont très claires dans les zones éclairées.

Cette difficulté est d'autant plus difficile à surmonter qu'il est souhaitable que l'accessoire puisse être exploité avec la même satisfaction tant en milieu urbain, habituellement très éclairé par des sources lumineuses localisées et faiblement éclairé par les projecteurs du véhicule qui sont en position code d'émission d'un faisceau à courte portée, qu'en milieu extra urbain exempt d'éclairage localisé avec un éclairage plus important fourni par les projecteurs du véhicule qui sont en position phare d'émission d'un faisceau lumineux à longue portée, voire accompagné de la projection d'un faisceau latéral anti-brouillard à courte portée. Il est aussi à prendre en compte que les véhicules circulant en sens inverse sont eux-mêmes émetteurs d'une source lumineuse, qui est susceptible d'altérer la pertinence de l'image perçue par le conducteur selon une reproduction la plus naturelle possible pour l'oeil humain.

### Objet de l'invention.

Le but de la présente invention est de proposer une méthode et un dispositif pour améliorer la pertinence de l'information communiquée à un conducteur relative à l'environnement de son véhicule, à partir de la capture d'image par des moyens optoélectroniques équipant le véhicule.

Il est plus particulièrement visé par la présente invention de résoudre les problèmes et de surmonter les difficultés qui ont été énoncés, en améliorant l'image dédiée à être retranscrite et/ou exploitée pour informer le conducteur de l'environnement nocturne de son véhicule, à partir d'un traitement des informations fournies directement ou indirectement par les moyens optoélectroniques équipant le véhicule.

La méthode de la présente invention est une méthode d'amélioration de la transcription d'images nocturnes capturées par des moyens optoélectroniques, pour informer un conducteur de l'environnement paysager de son véhicule. La méthode proposée comprend l'étape consistant à capturer des informations relatives aux images nocturnes par des moyens optoélectroniques équipant le véhicule, et une étape générale de conversion des images nocturnes capturées en images de transcription sur un moyen d'affichage, tel qu'un écran ou analogue, visible par le conducteur par des moyens généraux de traitement des informations capturées.

Selon la présente invention, une telle méthode est principalement reconnaissable en ce qu'elle associe à une opération de repérage sur les images capturées d'au moins une source lumineuse intense, une opération de traitement par assombrissement des pixels correspondant à cette source lumineuse intense. Les images retranscrites sur le moyen d'affichage à la disposition du conducteur, au moins en ce qui concerne la ou les sources lumineuses repérées et leur environnement proche, sont semblables à celles relevant d'une vision naturelle perçue par l'oeil humain de cette source lumineuse intense. L'assombrissement des pixels correspondant à la source lumineuse intense réside notamment à un gommage par substitution aux pixels clairs induits sur l'image capturée par la source lumineuse intense repérée, des pixels plus sombres effaçant au moins partiellement ces pixels clairs de l'image transcrite sur le moyen d'affichage.
Il en ressort finalement une amélioration du confort de l'image visualisée par le conducteur sur le moyen d'affichage, en procurant au conducteur une visualisation des sources lumineuses intenses repérées proche d'une perception naturelle de ces dernières par l'oeil humain.

Plus particulièrement, la méthode selon l'invention est une méthode d'amélioration de la transcription d'images nocturnes capturées par des moyens optoélectroniques pour informer un conducteur de l'environnement paysager de son véhicule, cette méthode comprenant l'étape consistant à capturer des informations relatives aux images nocturnes par des moyens optoélectroniques équipant le véhicule, et une étape de conversion générale des images nocturnes capturées en images de transcription sur un moyen d'affichage par des moyens généraux de traitement des informations capturées, cette méthode d'amélioration comprenant :
- une opération de repérage sur les images capturées d'au moins une source lumineuse intense, et
- une opération de traitement par assombrissement des pixels correspondant à cette source lumineuse intense, de manière à réduire sur l'image transcrite l'impact lumineux de la source lumineuse intense repérée sur l'image de transcription par rapport à l'impact lumineux de cette même source lumineuse sur l'image capturée, de manière à ce que les images de transcription sur le moyen d'affichage soient semblables à des images relevant d'une vision naturelle perçue par l'oeil humain de cette source lumineuse intense.

En effet, dans les images capturées classiquement, le halo lumineux est souvent beaucoup plus important en taille et en intensité que celui qui est perçu par l'oeil humain, ce dernier s'accommodant plus facilement que les capteurs électroniques. La source lumineuse occupe ainsi une place plus importante dans l'image, créant une sensation d'inconfort, notamment une sensation de moins bonne perception de zones moins éclairées. En utilisant la méthode selon la présente invention, tel que décrite au paragraphe précédent, on va pouvoir ainsi diminuer l'intensité du halo lumineux sans diminuer celle des zones moins éclairées. L'amélioration du confort de l'image visualisée par le conducteur sur le moyen d'affichage est ainsi davantage renforcée, en procurant au conducteur une visualisation des sources lumineuses intenses repérées proche d'une perception naturelle de ces dernières par l'oeil humain.

La source lumineuse intense est notamment un éclairage statique de la voie de circulation du véhicule ou du paysage environnant cette voie, tel qu'un éclairage urbain, ou encore des faisceaux lumineux émis par les projecteurs d'un véhicule circulant en sens inverse. La méthode proposée par la présente invention est avantageusement applicable aussi bien en milieu urbain qu'en milieu exempt d'éclairage statique, tel qu'une voie de circulation en milieu naturel.

L'opération de repérage sur les images capturées d'au moins la source lumineuse intense est avantageusement réalisée à partir de la mise en oeuvre du logiciel BeamAtic (Marque déposée).

Plus particulièrement, l'étape de conversion comprend une première opération consistant à repérer sur au moins une image capturée au moins un groupe de pixels correspondant à au moins un seuil prédéterminé de niveau de gris relatif à une source lumineuse intense. Cette première opération est associée à une deuxième opération consistant à traiter les pixels de ce groupe repéré en corrigeant leur niveau de gris par assombrissement en tout ou partie des pixels de ce groupe. Une telle combinaison d'opérations est apte à réduire sur l'image transcrite sur le moyen d'affichage à la disposition du conducteur, l'impact lumineux d'une source lumineuse intense repérée par rapport à l'impact lumineux de cette même source lumineuse sur l'image capturée.

La dite première opération de repérage consiste plus particulièrement à isoler le foyer de la source lumineuse intense et à délimiter le halo lumineux issu de ce foyer et l'entourant, l'opération de traitement par assombrissement des pixels consistant à assombrir différemment le foyer et le halo lumineux. Préférentiellement, l'assombrissement des pixels consiste à assombrir le halo lumineux sans assombrissement du foyer. Préférentiellement encore, l'assombrissement du halo lumineux est au moins de 14% du niveau de gris de l'image transcrite. Par exemple, lorsque l'assombrissement est appliqué à une image 12 bits, donc de 4096 niveaux de gris, le niveau de gris du halo lumineux est d'au plus 3500. Dans le cas d'une image 8 bits, donc de 256 niveaux de gris, le niveau de gris du halo lumineux est d'au plus 200.

Avantageusement, pour avoir une image moins sombre, l'assombrissement du halo lumineux est d'au plus 28% du niveau de gris de l'image transcrite.

Notamment encore, la dite deuxième opération de traitement des pixels consiste à assombrir le halo lumineux soit totalement, soit progressivement à partir du foyer de la source lumineuse repérée. L'assombrissement total du halo lumineux est de préférence limité à un assombrissement correspondant à celui de son environnement proche vers l'extérieur de la source lumineuse détectée. Cependant, il est envisageable d'assombrir le halo lumineux, voire aussi le foyer, selon une valeur prédéterminée et constante ou progressive.

Plus particulièrement et selon une première variante, la dite deuxième opération de traitement des pixels par assombrissement consiste à assombrir totalement le halo lumineux à un seuil de niveau de gris correspondant à celui environnant le halo lumineux vers l'extérieur de la source lumineuse intense détectée, ou au regard d'une méthode simplifiée selon une valeur prédéterminée constante.

Plus particulièrement et selon une deuxième variante, la dite deuxième opération de traitement des pixels par assombrissement consiste à assombrir progressivement le halo lumineux à partir du foyer jusqu'à un seuil de niveau de gris correspondant à celui environnant le halo lumineux vers l'extérieur de la source lumineuse intense détectée, ou au regard d'une méthode simplifiée selon une valeur prédéterminée et progressive vers l'extérieur de la source lumineuse intense repérée.

L'assombrissement progressif du halo lumineux à partir du foyer est susceptible d'être réalisé soit selon une progression linéaire, soit et de préférence selon une progression logarithmique plus proche d'une perception naturelle de la source lumineuse par un oeil humain.

Avantageusement, afin d'améliorer le contraste de l'image, les moyens optoélectroniques sont des capteurs ayant une bonne perception dynamique, tels que des capteurs CMOS.

Préférentiellement, pour un isolement d'une source lumineuse intense potentiellement perturbatrice au regard de son affichage avec une perception naturelle pour le conducteur, l'opération de repérage de la source lumineuse intense correspond à un repérage d'un seuil prédéterminé correspondant à un niveau de gris d'au moins 73% de la résolution en niveau de gris de l'image capturée. Par exemple dans le cadre d'une image avec une résolution de 4095 en niveau de gris, toute source lumineuse d'un niveau de gris d'au moins 3000 sera détectée et traitée selon la présente méthode.

La méthode selon la présente invention peut également comprendre une opération de conversion supplémentaire des images capturées en images transcrites à un niveau de gris compatible avec le moyen d'affichage, ladite opération de conversion supplémentaire intervenant indifféremment préalablement ou postérieurement à ladite opération de repérage et/ou à ladite opération de traitement. Par exemple, la détection et le traitement peuvent être appliquées à une image 12 bits convertie ensuite en une image en 8 bits. Mais il est également possible selon un autre exemple, de capturer une image en 12 bits, ensuite convertie en une image en 8 bits, et ensuite de procéder à la détection et au traitement sur l'image en 8 bits. En général, la conversion d'une image en une image de plus faible résolution accentue la taille du halo. La présente invention trouve donc un intérêt tout particulier lorsqu'une telle conversion est appliquée.

Préférentiellement, l'opération de repérage prend en compte au moins un paramètre relatif à une source lumineuse intense potentielle sur au moins une image capturée, de manière à détecter uniquement les sources lumineuses correspondant à des dispositifs d'éclairage. Préférentiellement, ce paramètre est choisi parmi la trajectoire de la source lumineuse, sa forme, sa texture, sa taille, son intensité et sa position dans l'image. Cependant d'autre paramètres relatifs à la source lumineuse pourraient être choisis. Préférentiellement, les dispositifs d'éclairage sont des projecteurs de véhicules, encore appelés phare, et éventuellement des dispositifs d'éclairage public fixes de la chaussée.

Plus particulièrement, l'étape de conversion générale comprend le cas échéant une troisième opération de conversion appliquant aux informations capturées à un niveau de gris en 12 bits un tableau de conversion LUT par exemple, pour transcrire les images nocturnes capturées en images transcrites à niveau de gris compatible avec le moyen d'affichage pour le conducteur, 8 bits notamment. Cette opération est appliquée dès lors que les moyens optoélectroniques sont avantageusement aptes à capturer des images en 12 bits pour obtenir une qualité optimisée des images capturées.

Il sera compris par analogie que la capture d'image est susceptible d'être effectuée en N bits, N étant un nombre quelconque supérieur à 8 bits. Dans ce cas, une conversion notamment par application d'un tableau de conversion LUT correspondant, sera appliquée pour convertir les images capturées en N bits en images à niveau de gris compatible avec le moyen d'affichage pour le conducteur, et plus particulièrement en 8 bits.

Cette troisième opération de conversion est susceptible d'intervenir indifféremment préalablement ou postérieurement à la première opération de repérage et/ou à la deuxième opération de traitement par assombrissement des pixels propres à au moins une source lumineuse intense dans au moins une image capturée.

Plus particulièrement, il est indifférent que la conversion des images capturées soit réalisée préalablement ou postérieurement au repérage de la ou des sources lumineuses intenses, ou encore préalablement ou postérieurement au traitement des zones correspondantes à ces sources lumineuses intenses. Cependant, il est préférable d'exploiter des moyens de conversion pour effectuer la troisième opération, qui sont avantageusement intégrés aux moyens électroniques équipant les moyens de capture d'images optoélectroniques.

La première opération de repérage prend en compte au moins un paramètre relatif à une source lumineuse intense potentielle sur au moins une image capturée ou le cas échéant sur au moins une image capturée et convertie lors de la mise en oeuvre de la troisième opération. Ce paramètre est préférentiellement choisi parmi : la trajectoire de la source lumineuse, sa forme, sa texture, sa taille et sa position dans l'image.

Selon une approche spécifique de mise en oeuvre d'une méthode selon la présente invention, celle-ci consiste idéalement à effectuer successivement les opérations suivantes :
* ) capturer les informations relatives aux images nocturnes par les moyens optoélectroniques équipant le véhicule,
* ) effectuer la troisième opération de conversion en appliquant aux informations capturées à un niveau de gris en 12 bits une conversion des images nocturnes capturées en images ayant un niveau de gris compatible avec le moyen d'affichage pour le conducteur, 8bit notamment, à partir par exemple de l'application d'un tableau de conversion LUT en exploitant des premiers moyens de calcul,
* ) effectuer la première opération de repérage du ou des groupes de pixels au moins correspondant au seuil prédéterminé de niveau de gris relatif à une source lumineuse intense, à partir de l'exploitation de deuxièmes moyens de calcul,
* ) effectuer la deuxième opération consistant à traiter les pixels de ce ou de ces groupes repérés en corrigeant leur niveau de gris par assombrissement en tout ou partie des pixels de ce groupe, à partir de l'exploitation de troisièmes moyens de calcul.

Pour mettre en oeuvre la méthode proposée par la présente invention, il est aussi exposé un dispositif pour sa mise en oeuvre qui comprend principalement :
* ) des moyens optoélectroniques de capture d'informations relatives aux images nocturnes environnant le véhicule.
* ) des premiers moyens de calcul pour transcrire les images capturées à un niveau de gris en 12 bits en images à niveau de gris compatible avec le moyen d'affichage pour le conducteur, tel qu'8 bits par application notamment d'un tableau de conversion LUT, préférentiellement suivant une règle logarithmique.
* ) des moyens de mémoire pour le stockage de l'information correspondante à au moins un seuil prédéterminé de niveau de gris relatif à une source lumineuse intense.
* ) des moyens de repérage d'au moins un groupe de pixels correspondant à un seuil prédéterminé de niveau de gris relatif à une source lumineuse intense, comprenant des deuxièmes moyens de calcul associés à des moyens de comparaison entre le dit seuil prédéterminé de niveau de gris relatif à une source lumineuse intense, et indifféremment les images capturées en niveau de gris à 12 bits ou le cas échéant les images capturées et transcrites en niveaux de gris compatible avec le moyens d'affichage pour le conducteur, notamment en 8 bits.
* ) des moyens de traitement par assombrissement des pixels du groupe repéré, comprenant des troisièmes moyens de calcul pour corriger par assombrissement les pixels de ce groupe repéré.

De préférence, les moyens de traitement par assombrissement sont associés à des moyens de reconnaissance d'un seuil de niveau de gris entourant le halo lumineux de la source de lumière intense repérée. De tels moyens de reconnaissance sont notamment en relation avec les moyens de mémoire, dans lesquels sont stockés au moins l'un des seuils respectifs d'encadrement d'une source lumineuse potentiellement intense, dont un premier seuil correspondant au foyer de la source lumineuse et un deuxième seuil correspondant au seuil minimal d'un halo lumineux entourant un tel foyer.

Les premiers moyens de calcul sont indifféremment des moyens électroniques isolés ou des moyens électroniques intégrés aux moyens électroniques des moyens optoélectroniques.

### Description des figures.

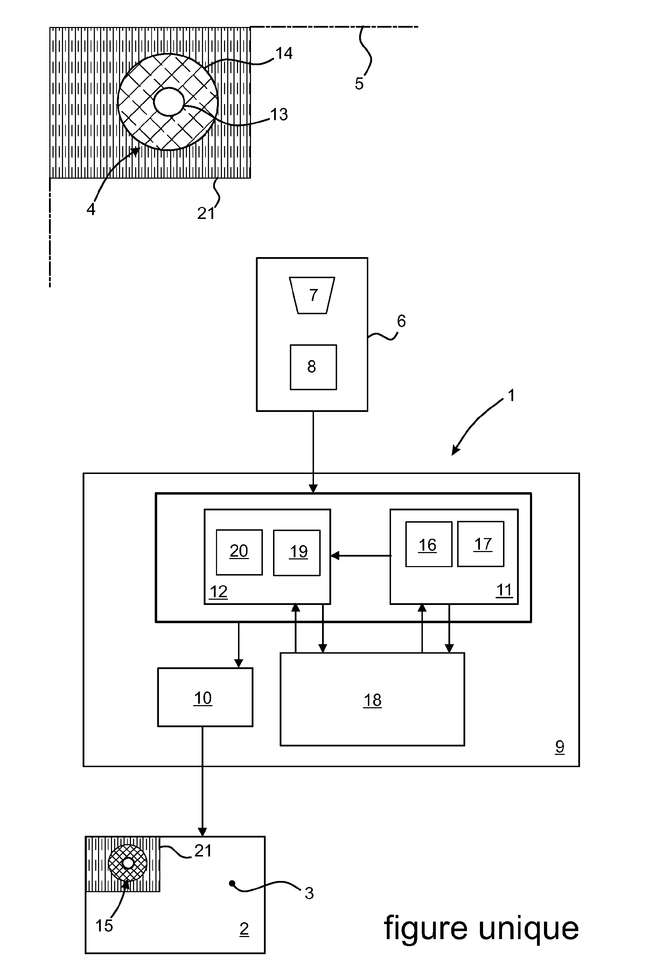

La présente invention sera mieux comprise à la lecture de la description qui va en être faite d'un exemple de réalisation illustré sur la figure unique de la planche annexée.

Sur la figure, un dispositif 1 est destiné à équiper un véhicule automobile pour informer le conducteur de l'environnement paysager nocturne de son véhicule, par l'intermédiaire d'un moyen d'affichage 2 à sa disposition. Ce dispositif 1 est plus particulièrement destiné à améliorer le confort du conducteur au regard des images transcrites 3 qu'il visualise sur le moyen d'affichage 2, en corrigeant l'effet sur ces images transcrites 3 produit par la présence d'une source lumineuse intense 4 au regard des images correspondantes 5 qui sont capturées par des moyens optoélectroniques 6 que comprend le dispositif 1.

Le dispositif 1 comprend dans sa généralité :
* ) les moyens optoélectroniques 6 de capture d'images. Ces moyens optoélectroniques 6 associent une caméra 7 de capture d'images en 12 bits et des premier moyens de calcul 8 pour transcrire les images capturées 5 à un niveau de gris de 12 bits en images à un niveau de gris de 8 bits, par application d'un tableau de conversion LUT.
* ) le moyen d'affichage 2 pour l'affichage des images capturées 3 et transcrites au moins par application de la méthode proposée par la présente invention
* ) des moyens généraux de traitement d'images 9 en provenance des moyens optoélectroniques 6, pour transcrire les images capturées 5 en images transcrites 3 affichables par le moyen d'affichage 2. De tels moyens généraux 9 sont portés par une carte électronique, et comprennent une interface 10 interposée entre le moyen d'affichage 2 et divers moyens de calcul et de traitement des images capturées. On notera que les premiers moyens de calcul 8 qui sont intégrés aux moyens optoélectroniques 6, tel que sur l'exemple de réalisation représenté, sont susceptibles d'être portés par la carte électronique et d'être constitutifs des moyens généraux de traitement des images 9, sans affecter la portée de la présente invention.

La présente invention propose d'intégrer aux moyens généraux de traitement 9 d'images, des moyens de repérage 11 de la source lumineuse intense 4, et d'associer à ces moyens de repérage 11 des moyens de traitement 12 des pixels correspondant à cette source lumineuse intense 4 pour corriger par assombrissement ces pixels. Un tel assombrissement permet d'estomper la surface et/ou la zone correspondante à la source lumineuse intense 4 présente sur l'image ou les images successivement capturées, comprenant son foyer 13 et le halo 14 qui l'entoure. L'association des moyens proposée est apte à retranscrire sur le moyen d'affichage 2 une image ou une représentation 15 correspondante à cette source lumineuse intense la plus proche possible de celle qui serait perçue par l'oeil humain.

Plus particulièrement, les moyens de repérage 11 comprennent des deuxièmes moyens de calcul 16 qui sont associés à des moyens de comparaison 17 entre les images capturées 5 en provenance des moyens optoélectroniques 6 et des seuils prédéterminés correspondant à un encadrement de pixels définissant une source lumineuse potentielle dont les pixels sont à traiter. Ces seuils, dont les valeurs sont stockés dans des moyens de mémoire 18 portés par la carte électronique et intégrés aux moyens généraux de traitement 9 des images capturées, correspondent à un premier seuil relatif au foyer 13 de la source lumineuse 4 et à un deuxième seuil correspondant au seuil minimal du halo lumineux 14 entourant le foyer 13. Les moyens de traitement par assombrissement 12 comprennent des troisièmes moyens de calcul 19 qui sont associés à des moyens de reconnaissance 20 d'un seuil de niveau de gris à atteindre en bordure du halo lumineux 14. Ce seuil de niveau de gris est stocké dans les moyens de mémoire et correspond soit un seuil prédéterminé admissible, soit à un seuil évolutif correspondant au niveau de gris 21 entourant le halo lumineux 14 de la source de lumière intense 4 repérée. Un tel seuil évolutif correspond à une valeur de pixels équivalente à celle de l'environnement proche du halo lumineux 14 à l'extérieur de la source lumineuse intense repérée sur l'image correspondante capturée, et est susceptible de varier en fonction des images successivement capturées et transmises aux moyens généraux de traitement 9.

On notera que les moyens généraux de traitement 9, et plus spécialement les moyens mis en oeuvre par la méthode proposée par la présente invention, sont aptes à être associés et/ou à intégrer et/ou à être en relation avec d'autres moyens de transcription des images capturées 5 en vue de leur amélioration selon d'autres critères que ceux relatifs à la présence éventuelle d'une source lumineuse intense repérée, sans porter atteinte à la portée de la présente invention. Plus particulièrement, il doit être compris que de tels autres moyens de transcription sont susceptibles de permettre une amélioration de la transcription sur le moyen d'affichage 2 des images capturées 5 selon divers critères et divers moyens différents que ceux proposés par la présente invention, sans porter atteinte à cette dernière.

## Revendications

1. Méthode d'amélioration de la transcription d'images nocturnes capturées par des moyens optoélectroniques (6) pour informer un conducteur de l'environnement paysager de son véhicule, cette méthode comprenant l'étape consistant à capturer des informations relatives aux images nocturnes par des moyens optoélectroniques (6) équipant le véhicule, et une étape de conversion générale des images nocturnes capturées (5) en images de transcription (3) sur un moyen d'affichage (2) par des moyens généraux de traitement (9) des informations capturées (5), ladite méthode d'amélioration comprenant :
- une opération de repérage sur les images capturées (5) d'au moins une source lumineuse intense (4), et
- une opération de traitement par assombrissement des pixels correspondant à cette source lumineuse intense (4), de manière à réduire sur l'image transcrite l'impact lumineux de la source lumineuse intense (4) repérée sur l'image de transcription par rapport à l'impact lumineux de cette même source lumineuse sur l'image capturée, de manière à ce que les images de transcription (3)sur le moyen d'affichage (2) soit semblables à des images (3) relevant d'une vision naturelle perçue par l'oeil humain de cette source lumineuse intense (4).

2. Méthode selon l'une quelconque des revendications 1 et 2, **caractérisée en ce que** l'opération de repérage consiste à isoler le foyer (13) de la source lumineuse intense (4) et à délimiter le halo lumineux (14) issu de ce foyer (13) et l'entourant et **en ce que** l'opération de traitement par assombrissement des pixels consiste à assombrir ledit halo lumineux (14) sans assombrissement dudit foyer (13).

3. Méthode selon la revendication 1 ou 2, **caractérisée en ce que** l'assombrissement du halo lumineux (14) est au moins de 14% du niveau de gris de l'image transcrite.

4. Méthode selon l'une quelconque des revendications 1 à 3, **caractérisée en ce que** l'assombrissement du halo lumineux (14) est d'au plus 28% du niveau de gris de l'image transcrite.

5. Méthode selon l'une quelconque des revendications 1 à 4, **caractérisée en ce que** l'opération de traitement des pixels consiste à assombrir totalement le halo lumineux (14) à un seuil de niveau de gris correspondant à celui environnant (21) le halo lumineux (14) vers l'extérieur de la source lumineuse intense (4) détectée.

6. Méthode selon l'une quelconque des revendications 1 à 4, **caractérisée en ce que** l'opération de traitement des pixels consiste à assombrir progressivement le halo lumineux (14) à partir du foyer (13) jusqu'à un seuil de niveau de gris correspondant à celui environnant (21) le halo lumineux (14) vers l'extérieur de la source lumineuse intense (4) détectée.

7. Méthode selon la revendication 6, **caractérisée en ce que** l'assombrissement progressif du halo lumineux (14) à partir du foyer (13) est réalisé selon une progression linéaire.

8. Méthode selon la revendication 6, **caractérisée en ce que** l'assombrissement progressif du halo lumineux (14) à partir du foyer (13) est réalisé selon une progression logarithmique.

9. Méthode selon l'une quelconque des revendications 1 à 8, **caractérisée en ce que** les moyens optoélectroniques sont des capteurs ayant une perception dynamique, tels que des capteurs CMOS.

10. Méthode selon l'une quelconque des revendications 1 à 9, **caractérisée en ce que** l'opération de repérage de la source lumineuse intense (4) correspond à un repérage d'un seuil prédéterminé correspondant à un niveau de gris d'au moins 73% de la résolution en niveau de gris de l'image capturée..

11. Méthode selon l'une quelconque des revendications précédentes, **caractérisée en ce qu'**elle comprend une opération de conversion supplémentaire des images capturées (5) en images transcrites (3) à un niveau de gris compatible avec le moyen d'affichage (2), ladite opération de conversion supplémentaire intervenant indifféremment préalablement ou postérieurement à ladite opération de repérage et/ou à ladite opération de traitement.

12. Méthode selon l'une quelconque des revendications précédentes, **caractérisée en ce que** l'opération de repérage prend en compte au moins un paramètre relatif à une source lumineuse intense (4) potentielle sur au moins une image capturée, de manière à détecter uniquement les sources lumineuses correspondant à des dispositifs d'éclairage.

13. Méthode selon la revendication 12, **caractérisée en ce que** ledit paramètre est choisi parmi la trajectoire de la source lumineuse, sa forme, sa texture, sa taille, son intensité et sa position dans l'image.

14. Méthode selon l'une quelconque au moins des revendications précédentes, **caractérisée en ce qu'**elle consiste idéalement à effectuer successivement les opérations suivantes :
- capturer les informations relatives aux images nocturnes par les moyens optoélectroniques (6) équipant le véhicule,
- effectuer la troisième opération de conversion en appliquant aux informations capturées (5) à un niveau de gris en 12 bits une conversion des images capturées (5) en images ayant un niveau de gris compatible avec le moyen d'affichage (2) à partir de l'exploitation de premiers moyens de calcul (8),
- effectuer la première opération de repérage du ou des groupes de pixels au moins correspondant au seuil prédéterminé de niveau de gris relatif à une source lumineuse intense (4), à partir de l'exploitation de deuxièmes moyens de calcul (11),
- effectuer la deuxième opération consistant à traiter les pixels de ce ou de ces groupes repérés en corrigeant leur niveau de gris par assombrissement en tout ou partie des pixels de ce groupe, à partir de l'exploitation de troisièmes moyens de calcul (12).

15. Dispositif pour mettre en oeuvre une méthode selon l'une quelconque des revendications précédentes, **caractérisé en ce qu'**il comprend :
- des moyens optoélectroniques (5) de capture d'informations relatives aux images nocturnes environnant le véhicule.
- des premiers moyens de calcul (8) pour transcrire les images capturées (5) à un niveau de gris en 12 bits en image à niveau de gris compatible avec le moyen d'affichage (2).
- des moyens de mémoire (18) pour le stockage de l'information correspondante à au moins un seuil prédéterminé de niveau de gris relatif à une source lumineuse intense (21).
- des moyens de repérage (11) d'au moins un groupe de pixels correspondant à un seuil prédéterminé de niveau de gris relatif à une source lumineuse intense (4), comprenant des deuxièmes moyens de calcul (16) qui sont associés à des moyens de comparaison (17) entre le dit seuil prédéterminé de niveau de gris relatif à une source lumineuse intense (4), et indifféremment les images capturées (5) à niveau de gris en 12 bits ou le cas échéant les informations capturées (5) en informations transcrites compatible avec le moyen d'affichage.
- des moyens de traitement par assombrissement (12) des pixels du groupe repéré, comprenant des troisièmes moyens de calcul (19) pour corriger par assombrissement les pixels de ce groupe repéré.
